# EUROPEAN PATENT SPECIFICATION

(11) **EP 1 030 484 B1**
(45) Date of publication and mention of the grant of the patent: **17.07.2013**
(21) Application number: 00300640.0
(22) Date of filing: 28.01.2000
(51) Int. Cl.: H04L 12/70, H04L 29/06, H04B 7/26, H04W 4/18, H04W 28/06, H04W 28/24, H04W 72/12, H04W 80/02, H04W 84/04, H04L 12/801, H04L 12/857

(54) **Data link layer quality of service for UMTS**
Datenverbindungsschichts-Dienstqualität für ein UMTS-Netz
Qualité de service de la couche liaison de données pour le réseau UMTS

(30) Priority: 29.01.1999 US 239545; 12.11.1999 US 432567
(43) Date of publication of application: 23.08.2000
(73) Proprietor: Alcatel Lucent, 75007 Paris (FR)
(72) Inventor: Ahdmadvand, Nima, Ottawa, Ontario K2B 7Z1 (CA); Fong, Mo-Han, Verdun, Quebec H3E 1H2 (CA); Wu, Geng, Verdun, Quebec H3E 1T2 (CA)
(74) Representative: Lück, Stephan

(56) References cited:
- G.C POLYZOS, G. XYLOMENOS: "Enhancing Wireless Internet Links for Multimedia Services" [Online] October 1998 (1998-10) , PROCEEDINGS OF THE MOMUC XP002273077 Retrieved from the Internet: <URL: http://www.mm.aueb.gr/archive/publications /gxpapers/c4.pdf> [retrieved on 2004-03-09] * figure 1 * * figure 2 * * page 4, left-hand column, line 1 - page 5, left-hand column, line 3 *
- CHENG F-C ET AL: "WIRELESS INTELLIGENT ATM NETWORK AND PROTOCOL DESIGN FOR FUTURE PERSONAL COMMUNICATION SYSTEMS" IEEE JOURNAL ON SELECTED AREAS IN COMMUNICATIONS, IEEE INC. NEW YORK, US, vol. 15, no. 7, 1 September 1997 (1997-09-01), pages 1289-1307, XP000721264 ISSN: 0733-8716

## Description

### BACKGROUND OF THE INVENTION

### Field of the Invention

The present invention relates generally to Data Link Layer (DLL) protocols, and more particularly to a DLL protocol for direct support of network layer protocol data services, i.e. the Internet Protocol (IP), for the Universal Mobile Telecommunications System (UMTS).

### Description of the Related Art

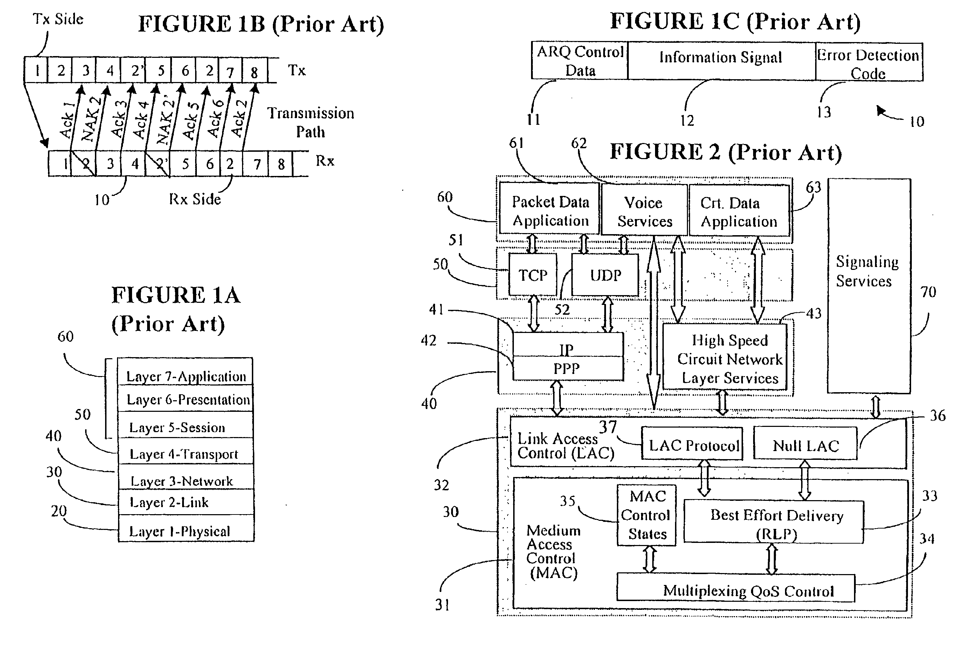

Layered architecture is a form of hierarchical modularity used in data network design. All major emerging communication network technologies rest on the Open System Interconnections (OSI) layer architecture of the International Organization for Standardization (ISO), illustrated in Figure 1. In this architecture, a layer performs a category of functions or services. The OSI model defines a Physical Layer (Layer 1) which specifies the standards for the transmission medium, a Data Link Layer (Layer 2), a Network Layer (Layer 3), a Transport Layer (Layer 4) and Application Layers (Layers 5 to 7).

Data Link Control protocols are used to mitigate the effects of impairments introduced by the physical transmission medium. A Data Link Control protocol is designed to deal specifically with the types of impairments found on the radio link and comprises mechanisms to deal with errors on the communications link, delays encountered in transmitting information, lost information, bandwidth conservation, and contention resolution.

The third layer is the Network Layer which implements routing and flow control for the network.

The fourth layer, Transport Layer, provides reliable and transparent transfer of data between end points. It also provides end-to-end error recovery and flow control. For the Internet based protocol model, the Transport Control Protocol (TCP) mainly corresponds to the Transport Layer of the OSI model.

Current wireless networks use layer 2-4 protocols designed specifically for the wired networks. However, there are some major differences between the wireless and the wired environment, resulting in important differences in the way these networks operate.

In a wired network the bit error rates are typically on the order of 10⁻⁹ or better, and errors and packet loss have a tendency to be random. Therefore, the wired transmission medium could be considered essentially error-free and the TCP data packets are lost mainly due to congestion in the intervening routers. Moreover, in a wired system the transmission channel has a constant bandwidth and is symmetrical, which means the characteristics of the channel in one direction can be deduced by looking at the characteristics of the channel in the other direction. Therefore, it is often easier to use a common link control protocols and to solve congestion problems by adding bandwidth.

On the other hand, in a wireless environment, most of these assumptions are no longer valid. The wireless channel is characterized by a high bit error rate. The errors occur in bursts that can affect a number of successive packets. Due to fading, low transmission power available to the User Equipment (UE), or the mobile station, and effects of interference, the radio link is not symmetrical and the bandwidth of a transmission channel rapidly fluctuates over time.

Furthermore, in a wireless environment, the amount of bandwidth available to the system is fixed and scarce. Adding bandwidth to the radio link may be expensive or even impossible due to regulatory constraints.

In addition, the issues in connection with increasing the transmission bandwidth are substantially different in the wireless environment. In a wired environment increasing the throughput is simply a matter of allocating as much bandwidth as possible to the connection. In a wireless environment, part of the bandwidth is used in error correction. More error correction means less payload. However, more error correction increases the probability of correct delivery without retransmissions. Thus, in the wireless environment increasing the end-to-end throughput may be obtained by reducing bandwidth assigned to payload and using the freed bandwidth for error correction.

The Data Link Layer (DLL) protocols available to date for wireless systems do not attempt to be inclusive as complete DLL protocols. Basically, off-the-shelf protocols intended for different media have been adopted for wireless systems. Even though some of those protocols are standardized, they are not very efficient for the wireless system. Also, some of the interactions between the non-wireless protocols and the communication system have caused a lot of complexities. For example, a point to point protocol (PPP) is currently used to conduct part of the functionality needed for the Data Link Layer (DLL). However, such a protocol imposes new limitations over the communication system. Moreover, for the DLL protocol to support the IP quality of service (IPQoS), the PPP encapsulation must be undone and this lowers the throughput.

Polyzos and Xylomenos described in an article "Enhancing Wireless Internet Links for Multimedia Services", published in Proceedings of the MOMUC, pp. 379-384, October 1998, the idea of packet classifier in the data link layer. The packet classifier decides which service should handle each packet, and sends it for processing. The packet is then sent to a FIFO in the service. This approach, therefore, processes the entire packet through different FIFO queues inside the Data Link Layer.

Cheng and Holtzman described in an article "Wireless Intelligent ATM Network and Protocol Design for Future Personal Communication Systems", published in Communications, Vol. 15 (7) pp. 1289-1307, September 1997, the mechanism of transport ATM-cell for the B-ISDN services through the radio link. The approach uses ATM cells from different VC classes to transport the traffic between a data link layer and a MAC layer. However, as the size of the ATM cells are fixed, this approach does not provide the flexibility of a variable sized data frame to balance the requirement between the payload and error correction.

Accordingly, there is a need for a specialized DLL protocol for a 3G wireless system which can satisfy the demand for advanced multimedia services in a UMTS environment, to support multiple concurrent voice, packet data, and circuit data services, each type of service having different QoS requirements.

### SUMMARY OF THE INVENTION

It is an object of the present invention to overcome disadvantages of the prior art associated with DLL protocols for direct support of network layer protocol data services. The above object is met by the combinations of features of the main claims, the sub-claims disclose further advantageous embodiments of the invention.

It is an object of the present invention to provide a Data Link Layer (DLL) Quality of Service for UMTS which supports the Internet Protocol (IP), and to alleviate totally or in part the drawbacks of the prior art. This novel DLL removes the need for non-wireless data link protocols with their inherent limitations imposed. Furthermore, a Radio Link Control (RLC) sublayer according to the invention is capable of interfacing with the existing non-wireless Data Link Protocols.

It is another object of the present invention to provide a DLL for a wireless communication system, which supports IP Quality of Service (IPQoS) requirements for various advanced multimedia services in the UMTS environment.

The invention provides a Data Link Control (DLC) layer according to claim 1, a method for direct processing a network layer protocol data packet according to claim 11, a Data Link Layer (DLL) according to claim 19, and a method for direct processing a network protocol data packet according to claim 29.

Advantageously, the Data Link Layer according to the invention, enables direct support of the IP networking and IP Quality of Service (IP QoS) in the wireless UMTS system by introducing the QoS planes to handle different QoS.

The Data Link Layer according to the present invention removes the need for other non-wireless data link protocols, such as PPP, to connect to the IP.

Beneficially, a Radio Link Control (RLC) sublayer supported by the preferred embodiments of the present invention is capable of interfacing with existing non-wireless Data Link protocols.

Other aspects and features of the present invention will become apparent to those skilled in the art upon review of the following description of specific embodiments of the invention in conjunction with the accompanying figures.

The Summary of the Invention does not necessarily disclose all the features essential for defining the invention; the invention may reside in a sub-combination of the disclosed features.

### BRIEF DESCRIPTION OF THE DRAWINGS

The invention will now be explained by way of example only and with reference to the drawings.
- Figure 1A: shows the OSI layers in general;
- Figure 1B: is a sequential timing chart for the transmission operation according to a conventional ARQ protocol;
- Figure 1C: is a transmission frame structure according to the conventional ARQ protocol;
- Figure 2: shows the OSI layers for a wireless communication system according to the proposed TIA TR-45.5;
- Figure 3: is a block diagram of the DLC protocol according to the invention;
- Figure 4: illustrates the mapping of the IP packets to RLP PDUs (frames) according to the invention
- Figure 5: illustrates the mode of operation of an improved dual mode Layer 2 ARQ protocol;
- Figure 6: shows the radio interface protocol architecture used with UMTS;
- Figure 7: is a block diagram of the Data Link Layer (DLL) protocol according to a preferred embodiment of the invention; and
- Figure 8: illustrates the mapping of IP packets to RLC PDUs (RLC frames) according to a preferred embodiment of the invention.

Similar references are used in different figures to denote similar components.

### DETAILED DESCRIPTION OF THE PREFERRED EMBODIMENTS

The following description is of a preferred embodiment by way of example only and without limitation to the combination of features necessary for carrying the invention into effect.

Throughout the description the term "Quality of Service" (QoS) refers to network layer protocol QoS which includes "best effort", "expedited delivery", and "assured delivery". A Class of Service (CoS) defined at the DLC layer includes a set of services that have substantially the same QoS requirements.

Figure 1A shows the International Organization for Standardization (ISO/OSI) reference model in general, and was described above. The layers are denoted with 20 (not shown), 30, 40, 50 and 60.

Figure 1B shows a typical data transmission, using Automatic Repeat Request (ARQ), and Figure 1C shows a transmission frame structure for a conventional ARQ system. Figure 1B illustrates a transmitter Tx on the transmitting side of a wireless transmission system, a receiver Rx on the receiving side, and the transmission path. The transmission path is a wireless transmission channel established between the transmitting and receiving sides.

The ARQ frame 10 of Figure 1C comprises client information, denoted "information signal" 12, which is the data to be transmitted. An error detection code 13, such as a Cyclic Redundancy Checking (CRC) code is attached to the transmission data 12 by the ARQ transmitter Tx. At the ARQ receiver Rx, each frame 10 of the received signal is checked for errors using field 13, and Rx sends a re-transmission request signal back to Tx whenever an error is detected. In the case the frame is received without errors, Rx extracts the information signal 12 from frame 10 and the client information is delivered to the respective terminal.

Field 11 denotes "ARQ control data" in frame 10 indicates to Tx if the data have arrived at Rx with or without errors, and also identifies which frame has to be retransmitted.

Figure 1B illustrates transmission of eight consecutive frames, frame 1 to frame 8. In this example, frame 1 is received correctly by Rx, which sends Ack #1 (Acknowledgment, frame #1) to Tx. On the other hand, frame 2 is received with errors, and Rx sends NAK #2 (Negative Acknowledgment, frame #2) to Tx, which indicates that frame 2 must be retransmitted. In response to this NAK #2 signal, Tx retransmits frame 2, denoted with 2' on Figure 1B. Nak #2 is received during transmission of frame 4 so that the second frame 2' is retransmitted immediately after frame 4 and before frame 5. If frame 2' is again received in error, retransmission is requested again, in response to the NAK #2' signal, until frame 2 is received without errors, as indicated to Tx by Ack #2 signal.

Current second generation (2G) wireless systems are designed mostly to handle voice traffic, with some allowances for circuit-switched data. Later, packet data services were grafted onto the 2G systems but these are uniformly treated according to "best effort delivery" schemes. The type of RLP used in 2G systems is typically based on the generic service(s) available to the MS (Mobile Station), as for example voice services, packet data services, and/or circuit switched data services. The voice service may use a transparent RLP which does not provide error detection. The packet data service may use a non-transparent RLP which provides error detection and retransmissions. The circuit switched data service may use either a transparent or a non-transparent RLP.

Enhancements to the existing 2G wireless systems are currently under way, motivated by higher bandwidth and the need to handle a wider variety of services. Proposed standard TIA TR-45.5 supports a fully generalized multi-media service model, which allows virtually any combination of voice, packet data, and high speed circuit data services to operate concurrently. The TIA TR-45.5 will include a sophisticated Quality of Service (QoS) control mechanism to balance the varying QoS requirements of multiple concurrent Classes of Service (CoS).

Non-wireless Data Link Layer protocols(e.g. PPP), Network Layer protocols (e.g. IP), Transport Layer protocols (e.g. TCP), and the Application Layers are considered as "upper layer protocols" in the wireless protocol stack architecture, shown in Figure 1A.

In the third generation (3G) wireless communication systems, the Internet Protocol (IP) is selected as the preferred network layer protocol 41.

The IP packets (e.g. versions 4 and 6) include the IP Quality of Service (IPQoS) information. There are two main trends in the industry to support the IP QoS. The first method uses an end-to-end flow control. This method is called the Integrated Services (Int-Serv), and it uses a ReSerVation setup Protocol (RSVP) to pass the QoS request from the end system to each intermediate router along the data path. An admission control algorithm at each router along the path verifies the resources needed to provide the requested QoS. A policy control unit performs the administration. The Int-Serv approach results in lowering the throughput and it is somewhat complicated and not easily scalable. In the second method, the complexity is moved to the edges of the network, keeping the core simple. This scheme is named Differentiated Services (Diff-Serv). The traffic conditioning is done in a per-hop basis. The Diff-Serv method is preferred as it is easy to implement and scalable.

The Data Link Layer protocols proposed to date for the TIA TR-45.5 do not support IP 41 directly and therefore, other protocols such as PPP 42 are used, as shown in Figure 2. Obviously, these protocols impose additional restrictions on the wireless system in general.

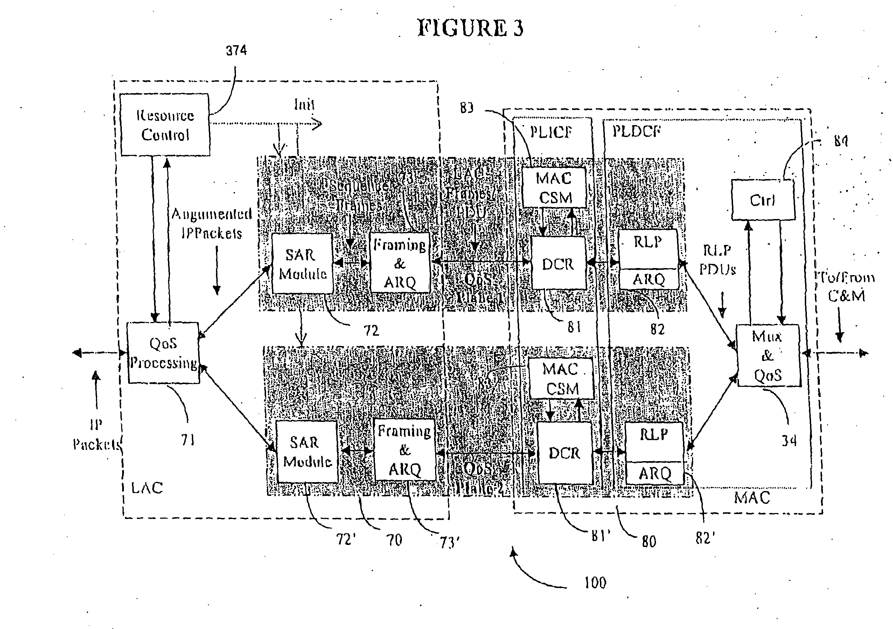

Figure 3 shows the structure of the DLC layer 100 according to a preferred embodiment of the invention, which is designed to support IP networking without adding any limitations that are not related to the wireless systems. The new DLC layer 100 design according to the preferred embodiment of the invention may be viewed as an interface between the IP layer 41 and the Physical Layer 20 (not shown), and can accommodate a variety of Classes of Service (CoS) having different Quality of Service (QoS) requirements. It follows that the layers proposed in the ITU IMT-2000, i.e. the DLC layer functionality is divided into LAC sublayer 70, and MAC sublayer 80 which in turn includes the PLDCF and the PLICF sections.

The DLC protocol 100 according to the preferred embodiment of the invention is shown in Figure 3 and includes direct support for the IP protocol 41 and isolates the logical operation of the network from the Physical Layer 20 (not shown). As indicated above, the IP packets include the IP Quality of Service (IPQoS) information. The DLC layer 100 has a scheme to map the IPQoS requirements to DLC Classes of Service (CoS). Each CoS is separated inside the DLC protocol layer 100 and directed to a specific QoS data plane.

Figure 3 shows the structure of an enhanced DLC protocol architecture 100 according to the invention, for two QoS data planes, namely QoS data plane 1 and QoS data plane 2, separated by a dotted line. It is however to be understood that the invention is not limited to two QoS data planes, and that more planes may run simultaneously in the DLC layer 30. Each QoS data plane is optimized to handle the QoS requirements of the corresponding CoS.

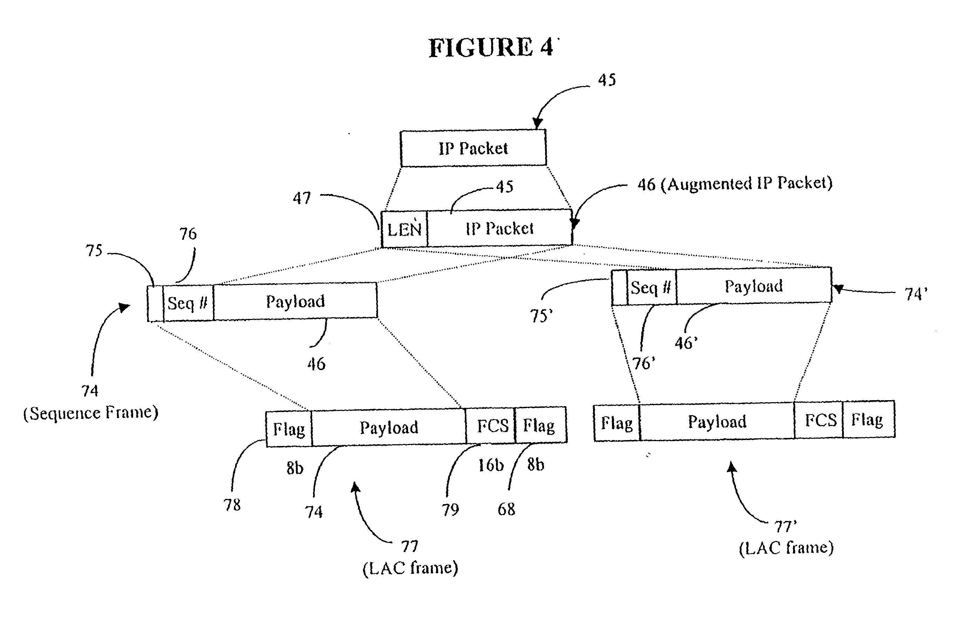

Figure 4 illustrates how the data is processed in the DLC protocol layer 100 and is described together with Figure 3.

A QoS processing module 71 of the LAC layer 70 is responsible for receiving the IP packets and extracting the IP QoS requirements included in the IP packets. IP QoS requirements are translated into QoS classes of service. The QoS processing module 71 also initiates a QoS data plane for each CoS through a Resource Control (RC) unit 374. Each QoS data plane include dedicated LAC and MAC instances.

An IP packet received by the QoS processing module 71 directly from IP block 41 of network layer 40 (shown in Figure 2), is denoted with 45. An optional length (LEN) indicator 47 is added to each packet 45 by the QoS processing module 71. The length indicator 47 is added to enable reconstruction of the original IP packet 45 by a Segmentation and Reassembly (SAR) module (not shown) at the receiving side. Similarly, the length indicator of the IP header can be used. In this case, the LEN indicator is not needed. The resulting packet 46 is called an "augmented IP packet".

Furthermore, based on the QoS classification obtained, QoS processing module 71 redirects the IP packets 45 to the proper QoS data plane. Packets without IP QoS classification are defaulted to a "best effort" QoS data plane. It should be noted that any network layer protocol other than the IP may be supported by including the corresponding functionality in the QoS processing module 71. There is at least one QoS processing module (not shown) for each Mobile Station (MS). Moreover, the receiving and the transmitting sides comprise identical QoS data planes.

A Segmentation and Reassembly (SAR) modules 72, 72' is provided in each QoS plane. For example, SAR 72 is provided in QoS data plane 1, and SAR 72' is provided in QoS data plane 2. In this example, SARs 72 and 72' receive the redirected and augmented IP packets 46, or QoS oriented data packets having same Quality of Service (QoS) requirements.

SAR module 72 or 72' chops the augmented IP packet 46 to smaller size packets, which are more suitable for error recovery and retransmission. These smaller size packets are defined as "sequence frames", denoted with 74, 74', on Figure 4. The size of a sequence frame is variable and dynamically optimized for different QoS data planes based on the QoS requirements and the radio link conditions.

A start of message (SOM) bit field 75 and a sequence number field 76 are then added to the payload 46. A logic "1' for example in SOM bit 75 could be used to identify the start of a sequence frame 74, while the sequence number is necessary in the retransmissions of unsuccessful frames.

As a result, a number of smaller same Class of Service (CoS) sequence frames 74, 74', are presented by a respective SAR module 72, 72', to a Framing and Automatic Repeat Request (ARQ) module 73, 73'. A new level of error recovery (i.e. ARQ) is created at the LAC level to provide better connectivity and to prevent propagation of errors to higher levels. The sequence frames are then encapsulated in High-level Data Link Control (HDLC)-like frames 77, 77', in a respective Framing and ARQ module 73, 73'.

HDLC-like framing is used to separate individual sequence frames by means of "bit stuffing" operation within the payload and encapsulating by start and end flags. A 16 bit Frame Check Sequence (FCS) 79 is included for error detection and is used for ARQ protocols. The HDLC-like framing applied here does not use the address and control fields of the generic HDLC frames. The HDLC-like frames serve as LAC Protocol Data Units (LAC-PDUs), or LAC frames, as indicated on Figure 4. The maximum size of a LAC frame 77 is defaulted to be the same as the one for PPP, which is 1500 bytes. This maximum value is negotiable.

As discussed above, the sequence frame 74, 74', has variable length which can be dynamically adjusted by the transmitting side, based on the radio link conditions. This results in variable length LAC-PDUs.

The radio link conditions can be monitored in the following ways. If there are many negative acknowledgments (NAKs) from the receiving side, or for a predetermined period of time no acknowledgment is received, then the LAC-PDU size could be lowered to enhance the error correction and the overall throughput. No negotiations take place between the transmitting and the receiving LAC instances and therefore, there is no need for over the air signalling.

The LAC-PDUs 77 are then delivered to the MAC instance 80 in the same QoS data plane. The point-to-point link connectivity of each QoS data plane is maintained by peer LAC instances at the transmitting and the receiving sides.

According to the invention, the IP layer 41 can sit on top of the new DLC layer 100 and the DLC protocol provides direct support for any network layer protocol with no need for any other protocol as an interface. This greatly reduces the limitations imposed by other protocols, which are not designed for the wireless systems.

Within each QoS plane, MAC sublayer 80 comprises the PLICF and PLDCF sections, as per TIA TR-45.5. A Dedicated/Common Router (DCR) 81 or 81', is controlled by the MAC Control State Machine (MAC CSM) 83, 83' to route LAC-PDUs to be carried over a dedicated or a common radio traffic channel. When a dedicated radio traffic channel is used, the PLDCF section includes a dedicated Radio Link Protocol (RLP) 82 or 82', as defined in TIA TR-45.5. The RLP 82 or 82', treats the incoming traffic from the DCR 81, or 81' as a byte stream and encapsulates the LAC-PDUs into 20 ms RLP-PDUs.

For the non-transparent RLP (as defined in the TIA TR-45.5 and the TIA/EIA/IS-707A), ARQ function is also provided at the MAC level. The RLP-PDUs which are received with errors will be retransmitted. The functions of the peer RLPs at the receiving side include the re-sequencing of the received PDUs to insure in-order-delivery to the MS/LAC sublayer. The RLPs used are designed for different classes of service (CoS). This adds another level of error correction and flexibility for optimizing a QoS data plane for a specific CoS.

A preferred embodiment of the present invention also provides an improved ARQ protocol at the MAC level with two modes of operations: a normal-mode (NM) and a burst-mode (BM). When in normal-mode, a Selective Repeat (SR) ARQ scheme is used. In burst-mode, a Stop-and-Wait (SW) ARQ scheme is used. Depending on the CoS or the QoS requirements, the ARQ protocol chooses to use either one of the SR or SW schemes.

The SR scheme provides highest throughput efficiency since the transmitter transmits frames continuously and only the corrupted frames are retransmitted. However, to operate in SR mode, an initialization handshake procedure is needed so that peer ARQ protocol entities are initialized, i.e. the frame sequence number is reset to zero, and the retransmissions buffer is cleared. The latency and bandwidth overhead introduced by the initialization procedures are undesirable if, for example, the traffic profile of the service consists of short data bursts with large inter-arrival time and consequently, the peer RLP entities need to be re-initialized after each idle period.

The SW scheme is used for short and infrequent data bursts. For the SW scheme, the transmitter stops and waits for acknowledgment from the receiver before sending out the next PDU. There is no need to synchronize the state between peer ARQ protocol entities. Therefore, when the SW scheme is used, no initialization procedures are needed as in the SR case, which reduces the associated latency.

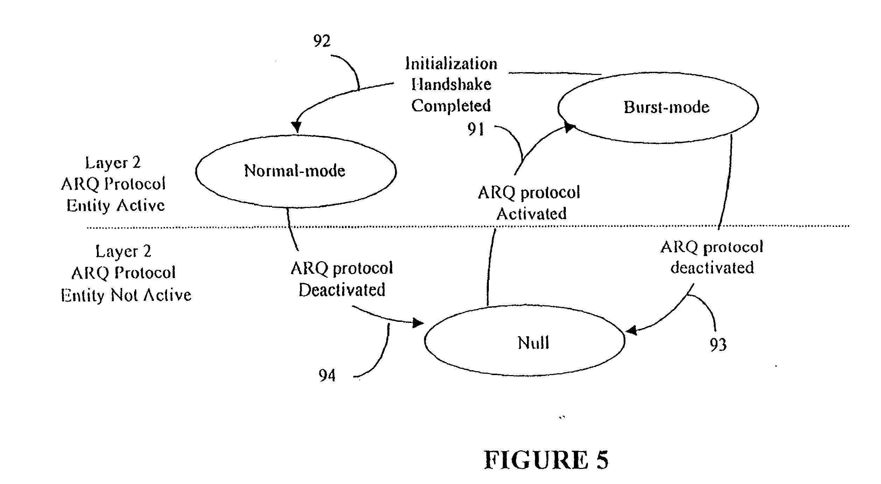

As shown in Figure 5, a RLP entity is operating in one of the two modes, i.e., normal-mode and burst-mode. When the RLP entity is first activated, it transits from the NULL state to a default mode which is the burst-mode as shown at 91, where no initialization handshake is required. It should be noted that RLP protocols are provided in pairs, one at each end of the communication link.

The RLP protocol transits to the normal-mode as shown at 92, when certain implementation specific conditions are met. One example of such conditions is when the pending data size is greater than a specific threshold. It is to be understood that other conditions for transition from burst-mode to normal-mode may be imposed, according to the respective CoS.

Whenever the RLP protocol entity at one end decides to transit to the normal-mode, it starts an initialization handshake procedure. Once the handshake procedure is completed, peer RLP protocol entities (the paired RLPs) enter in the normal-mode of operation. Therefore, the transition is automatically synchronized between peer RLP protocol entities.

During the initialization handshake process, burst-mode operation is not allowed. For unacknowledged data burst sent out prior to the initialization handshake process, the RLP protocol entity resends the data burst after entering the normal-mode. Any data burst received during the initialization handshake process is discarded by the ARQ protocol entity.

Once in the normal-mode, the RLP protocol entity is not allowed to transit back to the burst-mode, since the peer protocol entity at the other end of the communication link is already synchronized.

When the RLP instance is released due to the MAC state machine transition to "dormant state", the RLP protocol is deactivated from both modes as shown at 93 and 94.

We should also note that other ARQ methods may be used in the QoS data plane as defined by the present invention for optimizing the operation of the QoS data planes.

The PLDCF section contains the MUX&QoS module 34 which multiplexes various CoS RLP frames onto different physical channels. Based on their QoS requirements, MUX&QoS 34 transmits multiple service type frames to the Physical Layer 20 (not shown) for Coding and Modulation (C&M).

The above description was made for the forward direction of transmission, i.e. from the transmitting side to the receiving side. It is to be understood that the operations are similar for the reverse direction.

At the receiving side, peer SAR modules (not shown) perform reassembly of the multiple Class of Service (CoS) frames received from a peer dedicated/ common router (DCR) module (not shown).

### Data Link Layer for UMTS

A wireless communication system has to support a packet switched data in a circuit switched environment. Previously, for DLL protocols, packet data sessions were defined based on different application sessions and resources were assigned to each of them. According to a preferred embodiment of the present invention the incoming traffic is considered a combination of different IP flows with different QoS requirements (or Classes), called subflows. Thus, the packet data application sessions/flows is replaced with QoS subflows. Irrespective of the application which generated the IP flow, the flow is categorized based on the QoS requirements, or the CoS.

It is to be noted that prior art methods have to undo all the higher layers framing and to duplicate all the QoS classifications done at the higher layers in order to differentiate among different applications, and this is contrary to the layering scheme strategy.

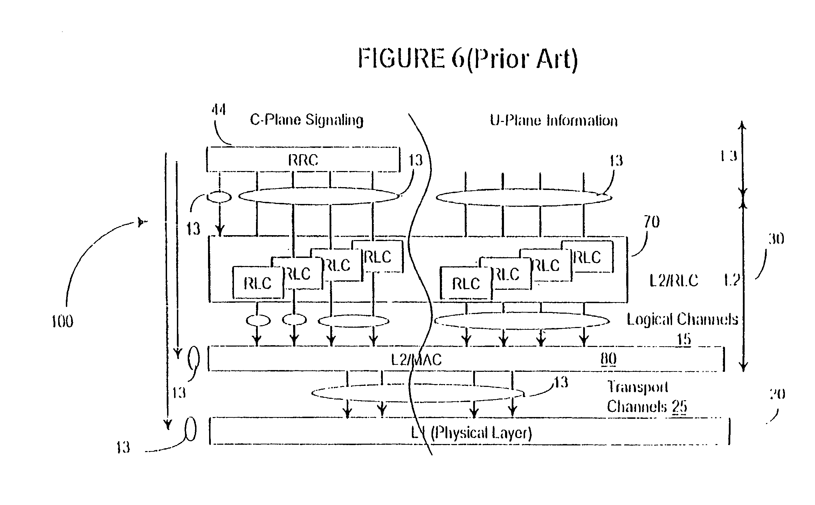

Figure 6 shows the UMTS radio interface protocol architecture layer proposed for a 3G wireless network and is reproduced from the Third Generation Partnership Proposal Technical Specification 25.301 (3GPP TS 25.301).

Layer-1, or the Physical Layer 20 of the UMTS radio interface is responsible for coding and modulation of data transmitted over the air.

Layer-2, or the Data Link Layer 30 is subdivided into a Radio Link Control (RLC) sublayer 70 and the Medium Access Control (MAC) sublayer 80. The separation in MAC 80 and RLC 70 sublayers is motivated by the need to support a wide range of upper layer services, and also the requirement to provide high efficiency and low latency data services over a wide performance range, i.e. from 1.2 Kbps to greater than 2 Mbps. Other motivators are the need for supporting high QoS delivery of circuit and packet data services, such as limitations on acceptable delays and/or data BER (bit error rate), and the growing demand for advanced multimedia services. Each multimedia service has different QoS requirements. Data Link Layer 30 also comprises a C-Plane Signalling and a U-Plane Information for separating the information from control signals.

The RLC 70 of the radio interface protocol architecture 100 for the UMTS shown in Figure 6, receives data packets from the higher layers, such as IP, through Service Access Points (SAP) 13, and delivers RLC frames to the MAC sublayer 80. The RLC frames are queued into logical channels 15. At the MAC sublayer 80, the RLC frames are multiplexed onto transport channels 25. The transport channels 25 are the interface of the Physical Layer 20 to the Data Link Layer 30. In fact, Data Link Layer 30 functions are divided in two parts, Physical Layer Independent Convergence Function (PLICF) handled in the RLC 70, and Physical Layer Dependent Convergence Function (PLDCF) included in the MAC 80. It is assumed that there is one instance of RLC 70 for each data application/session.

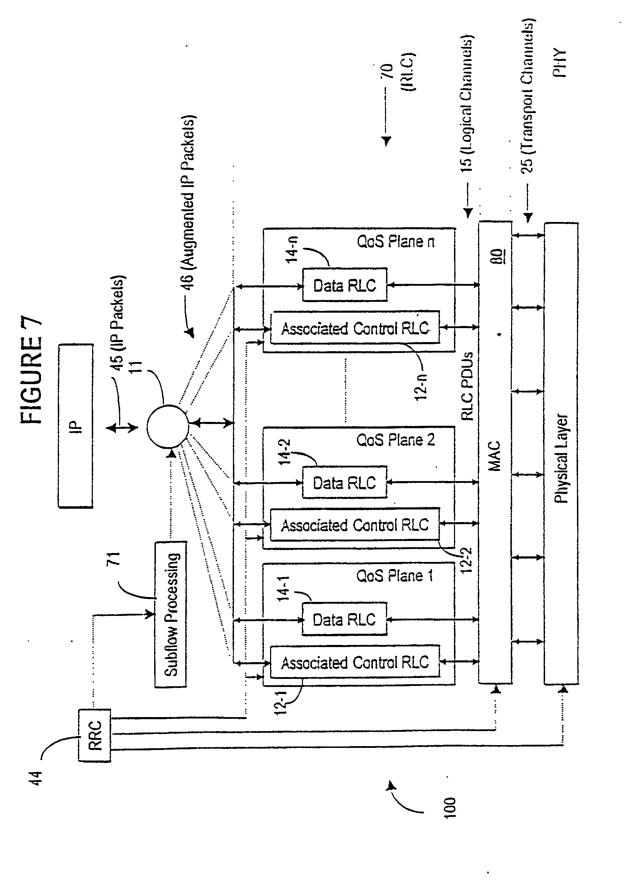

Figure 7 illustrates the DLL protocol according to a preferred embodiment of the invention which includes direct support for the IP protocol and isolates the logical operation of the Network Layers from the Physical Layer 20. The structure of the Data Link Layer 30 shown in Figure 7, is designed to support IP networking without adding any limitations that are not related to the wireless systems. The new Data Link Layer 30 design may be viewed as an interface between the IP layer and the Physical Layer 20, and can accommodate a variety of Classes of Service (CoS) having different Quality of Service (QoS) requirements.

As indicated before, the IP packets 45 include the IP Quality of Service (IPQoS) information. The DLL protocol 100 has a scheme to map the IPQoS requirements to Classes of Service (CoS). Each CoS is separated inside the DLL 30 and directed to a dedicated QoS plane.

The architecture of Figure 7, comprises a subflow processing module 71 for receiving the IP packets through check point 11 and redirecting the IP packets 45 to different instances of the QoS planes (1...n). The subflow processing module 71 checks the IP packets 45 and categorizes them into different subflows, or equivalently QoS planes (1...n). For example, if the Diff-Serv method is used, the subflow processing module 71 may simply peak into the IP packets 45 to map the QoS requirements, or CoS included in the IP packet 45 to one of the QoS planes (1...n) in the RLC 70. If the Int-Serv is used, the subflow processing module 71 involves in the RSVP, or any admission protocol, and redirects each IP packet 45 to one of the QoS planes (1...n) based on the agreed QoS requirements. It is to be noted that there is one dedicated subflow processing module 71 for each User Equipment (UE).

Each QoS plane (1..n) is configured to handle a CoS or equivalently a range of QoS requirements. Each QoS plane (1..n) includes a Data-RLCs (D-RLC) (14-1 ... 14-n) and its associated Control-RLCs (C-RLC) (12-1...12-n). As shown before, the D-RLCs (14-1...14-n) and C-RLCs (12-1...12-n) receive the IP data packets 45, create the RLC PDUs, or RLC frames and deliver the RCL frames over logical channels 15 to the MAC sublayer 80 to be multiplexed onto different transport channels 25.

The inclusion of an associated Control-RLC 12 is necessary because data are handled based on their QoS requirements and consequently, the associated control signals must be treated at least the same to meet those requirements. For example, it is not acceptable to send control signals associated with a higher priority to propagate data with a lower priority traffic. This may result in violation of proper treatment of the QoS requirements corresponding to the transmitted data. Still, increasing the priority of the Control-RLC 12 to indirectly increase the priority of associated data, is permitted. This is especially important in the case where control signals are needed to insure connectivity, although the data might be sent as in the best effort delivery.

In contrast with the fixed Radio Link Protocols (RLPs) defined for the "cdma2000" standard, the RLCs are totally re-configurable, i.e. the segment size, the number of retransmission, etc. Thus, QoS planes (1...n) are also reconfigurable to fit a corresponding CoS.

There are a number of entities inside a QoS plane (1...n) that can be dynamically reconfigured, or fine tuned and optimized to meet specific QoS requirements of a CoS. This includes, segment size at the Segmentation, Concatenation and Reassembly (SCR) module of the RLC, resource assignments, logical channel to transport channel mapping, priorities, etc. Moreover, the type of the error recovery method used in each QoS plane (1...n) varies and depends on the QoS requirements in that particular plane.

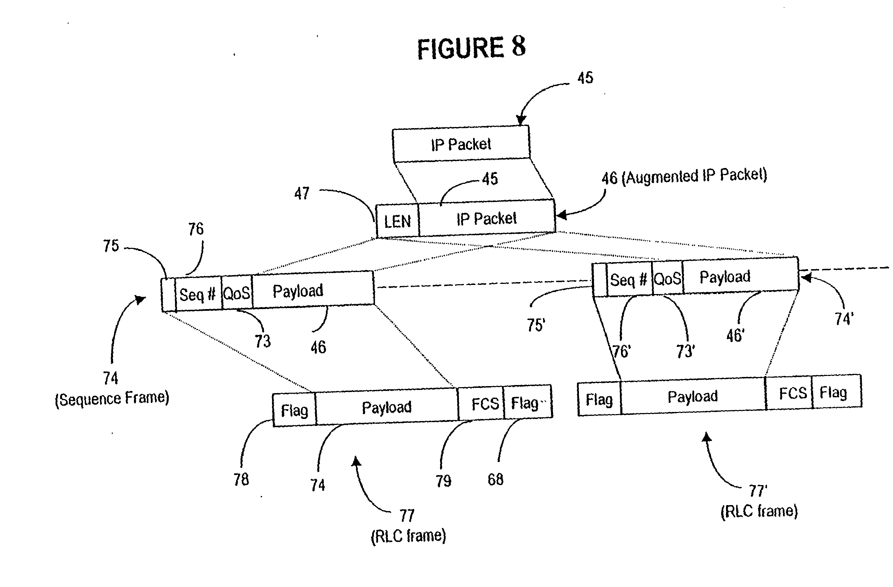

Figure 8 illustrates the process of mapping the received IP packets 45 into RLC PDUs, or RLC frames according to the DLL protocol 100. As discussed before in connection with Figure 7, the subflow processing module 71 is responsible for receiving the IP packets 45 and extracting the IP QoS requirements included in each packet. IP QoS requirements are translated into classes of service (CoS) The subflow processing module 71 also initiates a QoS plane (1... n), or subflow, for each CoS under the supervision of a Radio Resource Control (RRC) unit 44. Each QoS plane (1...n) includes dedicated D-RLC and (14-1...14-n) and C-RLCs (12-1...12-n) instances.

Based on the QoS classification obtained, the QoS subflow processing module 71 redirects the IP packets 45 to the proper QoS plane (1...n). Packets without IP QoS classification are defaulted to a "best effort" data plane. It should be noted that any network layer protocol other than the IP may be supported by including the corresponding functionality in the QoS subflow processing module 71. There is one corresponding QoS subflow processing module 71 for each User Equipment (UE). Moreover, the receiving and the transmitting ends comprise identical QoS planes (1...n).

The method of generating radio link control protocol data units (RLC PDUs), or RLC frames will be now discussed in connection with RLC frame 77. As shown in Figure 8, an optional length (LEN) indicator 47 is added to each IP packet 45 by the subflow processing module 71. The length indicator 47 is added to enable reconstruction of the original IP packet 45 by a Segmentation, Concatenation and Reassembly (SCR) module which is part of the RLC at the receiving side (not shown). In the case when the length indicator of the IP header is used, the LEN indicator 47 is not needed. In any event, the resulting packet 46 is called an "augmented IP packet".

The SCR module of the D-RLC (14-1...14-n) chops the augmented IP packet 46 into smaller size packets, which are more suitable for error recovery and retransmission. These smaller size packets, or "sequence frames" are denoted with 74, on Figure 8. The size of a sequence frame 74 may be variable and dynamically optimized in different QoS planes (1...n), based on the QoS requirements and on the radio link conditions.

A start of message (SOM) bit field 75 and a sequence number field 76 are then added to the payload 46. A logic "1" for example in SOM bit 75 could be used to identify the start of the sequence frame 74. The sequence number is necessary in the retransmission of unsuccessful frames.

A QoS field 73 is also added to each sequence frame 74 to differentiate various frames directed to different QoS planes (1...n). This field is denoted as "QoS" in Figure 7, and contains the QoS plane number of the frame. This information is necessary for the multiplexing/demultiplexing process performed between peer Medium Access Control (MAC) layers. Specifically, field 73 is needed at the MAC sublayer at the receiving end for redirecting the received frames to the proper QoS plane.

One important feature in the SCR module (which is part of the RLC), is the "concatenation" of short data messages. In the case where the amount of data in each IP packet 45 is very small with respect to the size of the RLC PDU 77, i.e. a 10 ms frame load, the SCR module concatenates a number of short messages into one RLC frame 77. This is a subframing process performed at the Link Layer 30 level, is called "multiframing".

A frame check sequence (FCS) 79 and flags 68 and 78 may be added. The RLC frame 77 are then delivered to the MAC instances over the logical channels 15.

The point-to-point link connectivity of each QoS plane (1...n) is maintained by peer RLC instances located at both the transmitting and the receiving sides.

The RLC Protocol Data Units (RLC-PDUs), or RLC frames 77 are delivered to the MAC sublayer 80 to be multiplexed onto different transport channels 25 and prioritized based on their QoS requirements. The Radio Resource Control (RRC) module 44 controls this operation.

In the receiving side, the MAC sublayer demultiplexes the received frames and redirects them to corresponding QoS planes based on their QoS plane number field 73.

A Data Link Layer (DLL) 20 protocol for direct support of the Internet Protocol (IP) networking in the Universal Mobile Telecommunications System (UMTS) 100, is provided. The disclosed Data Link Layer 20 comprises a Radio Link Control (RLC) 70 sublayer and a Medium Access Control (MAC) 80 sublayer. At a transmit end, as well as at a receiving end of the UMTS wireless system 100, a plurality of Quality of Service (QoS) planes 1...n are created according to IP QoS requirements. At the RLC level, each QoS plane 1...n comprises a Data-RLC 14-1,..., 14-n and a Control-RLC 12-1, ..., 12-n. The QoS planes 1...n are optimized to handle the QoS requirements of a corresponding Class of Service (CoS). At the transmitting end, the data packets received from the upper layers are directed to a QoS plane according to the particular QoS information they contain, and processed according to their particular QoS requirement. A Segmentation, Concatenation, and Reframing module (SCR) is used to generate variable size RLC frames 77; 77', including multiframing. The variable size RLC frames 77; 77' are transmitted to the MAC sublayer 80 using logical channels 15. At the MAC sublayer 80, the RLC frames 77; 77' are multiplexed onto transport channels 25 based on their QoS requirements and transmitted to the physical layer for propagation to the receiving end.

According to the invention, the IP layer can sit on top of the new Data Link Layer 20 and the DLL protocol 100 provides direct support for any network layer protocol with no need for any additional protocol as an interface. This greatly reduces the limitations imposed by other protocols, which are not designed for the wireless systems.

The above description was made for the forward direction of transmission, i.e. from the transmitting end to the receiving end. It is to be understood that the operations are similar for the reverse direction.

Numerous modifications, variations, and adaptations may be made to the particular embodiments of the invention described above without departing from the scope of the invention defined in its claims.

## Claims

1. A Data Link Control, DLC, layer (100) at a transmit end of a wireless communication system for direct support of a network layer protocol (41), comprising:
- a plurality of Quality of Service, QoS, data planes, each of said plurality of QoS data planes for processing a QoS oriented data packet according to a class of service, CoS, and to provide a radio link protocol data unit, RLP PDU;
- a QoS processing module (71) for receiving a network layer protocol data packet (45) converting said network layer protocol data packet into said QoS oriented data packet, and directing said QoS oriented data packet to one of said QoS data planes according to QoS information in said network layer protocol data packet; and
- an interface (34) between said DLC and a physical layer for receiving said RLP PDU and transmitting same to said physical layer;
**characterized in that** each said QoS data plane comprises:
- a Link Access Control, LAC, sublayer (70) for receiving said QoS oriented data packet and generating a HDLC-like LAC frame (77), said generation including bit stuffing within the payload (74) and encapsulating by a start flag (78) and an end flag (68), said HDLC-like LAC frame having a variable size, said variable size being dynamically optimized based on conditions of a communication link; and
- a Medium Access Control, MAC, sublayer (80) for receiving said LAC frame and generating said RLP PDU.

2. A DLC layer as claimed in claim 1, wherein said LAC sublayer comprises: a segmentation and re-assembly, SAR, module (72) for receiving said service oriented data packet and dividing same into a number of sequence frames (74); and a framing and automatic repeat request, ARQ, module (73) for receiving said sequence frames and encapsulating a plurality of said sequence frames into said LAC frame.

3. A DLC layer as claimed in claim 1 or 2, wherein said MAC sublayer comprises: a dedicated/common router, DCR, (81) for receiving and routing said LAC frames to be carried over a radio traffic channel; and a radio link protocol, RLP, (82) for receiving said LAC frames and converting said LAC frames into said RLP PDUs.

4. A DLC layer as claimed in claim 1, wherein said network layer protocol is Internet Protocol, IP.

5. A DLC layer as claimed in claim 4, further comprising a MAC control state machine CSM, (83) for controlling the delivery of said LAC frames to a radio link protocol, RLP, of the MAC sublayer.

6. A DLC layer as claimed in claim 3, wherein said RLP comprises an automatic repeat request, ARQ, function for automatic retransmission of said RLP PDUs if received in error at a receiving end of said wireless system.

7. A DLC layer as claimed in claim 6, wherein said ARQ function has a selective repeat component active during a normal-mode, NM, of operation and a stop and wait, SW, component active during a burst-mode, BM, of operation.

8. A DLC layer as claimed in claim 1, wherein said size of said LAC frame is automatically reduced: i) when a predetermined number of negative acknowledgments, NAK, are received; or ii) if no acknowledgments are received for a predetermined period of time.

9. A DLC layer as claimed in any preceding claim, wherein said interface is a multiplexer for receiving said RLP PDU, and multiplexing same into a physical channel according to the QoS of said RLP PDU, for transmission to a receiving end of said wireless system.

10. A DLC layer as claimed in any preceding claim, further comprising a resource control unit (374) for mapping a QoS requirement to a DLC class of services, CoS, and separating said CoS inside the DLC protocol into said QoS data planes.

11. A method for direct processing a network layer protocol data packet (45) for transmission over a wireless communication system, comprising the steps of:
- separating a data link layer of the wireless communication system into a plurality of Quality of Service, QoS, data planes, each of said plurality of QoS planes for processing a QoS oriented data packet according to a class of service, CoS, and for providing a radio link protocol data unit, RLP PDU;
- processing said network layer protocol data packet by converting said network layer protocol data packet into said QoS oriented data packet and directing said QoS oriented data packet to one of said QoS data planes according to QoS information in said network layer protocol data packet;
- forwarding said RLP PDU to a physical layer according to the QoS of said RLP PDU;
**characterized by** the step of separating comprising:
- providing a plurality of QoS oriented Link Access Control, LAC, protocol instances (70), a LAC protocol instance for each said QoS data plane, said LAC protocol instance for receiving said service oriented data packet and generating a HDLC-like LAC frame (74), said generation including bit stuffing within the payload (74) and encapsulating by a start flag (78) and an end flag (68), said HDLC-like LAC frame having a variable size, said variable size being dynamically optimized based on conditions of a communication link; and
- providing a plurality of QoS oriented Medium Access Control, MAC, protocol instances (80), a MAC protocol instance for each said QoS data plane, said MAC protocol instance for receiving said LAC frames and generating said radio link protocol data unit, RLP PDU.

12. A method as claimed in claim 11, wherein said step of generating a HDLC-like LAC frame comprises dividing said QoS oriented data packet into a number of sequence frames and encapsulating a plurality of said sequence frames into said LAC frame.

13. A method as claimed in claim 12, wherein said network layer protocol is Internet Protocol, IP.

14. A method as claimed in claim 11 or 12, wherein said step of generating said RLP PDU comprises receiving said LAC frames and converting said LAC frames into said RLP PDUs.

15. A method as claimed in claim 14, further comprising the step of controlling the delivery of said LAC frames to said RLP.

16. A method as claimed in anyone of claims 12 to 15, further comprising the step of sending an automatic repeat request, ARQ, function for automatic retransmission of said RLP PDUs if received in error at a receiving end of said wireless system.

17. A method as claimed in anyone of claims 11 to 16, wherein said step of processing comprises mapping a QoS requirement to a DLC class of service, CoS, and separating said CoS inside the DLC protocol into said QoS data planes.

18. A method as claimed in claim 17, wherein said step of processing further comprises adding a length indicator to said network layer protocol data packet.

19. A Data Link Layer, DLL, (100) at a transmitting end of a Universal Mobile Telecommunications System, UMTS, for direct support of a network layer, comprising:
- a plurality of Quality of Service, QoS, planes, each said QoS plane for processing a QoS oriented data packet according to a QoS requirement, and for providing a radio link control, RLC, frame;
- a subflow processing module for receiving a network layer protocol data packet, converting said network layer protocol data packet into said QoS oriented data packet, and directing said QoS oriented data packet to one of said QoS planes according to QoS information in said network layer protocol data packet; and
- an interface between said DLL and a physical layer for receiving said RLC and transmitting same to said physical layer;
**characterized in that** each said QoS plane comprises:
- a Radio Link Control, RLC, sublayer (70) for receiving said QoS oriented data packet, and generating a RLC frame (77), said RLC frame having a variable size, said variable size being dynamically optimized based on conditions of a communication link; and
- a Medium Access Control, MAC, sublayer (80) for receiving said RLC frame over logical channels and multiplexing said RLC frames onto transport channels.

20. A Data Link Layer as claimed in claim 19, wherein said network layer protocol is Internet Protocol, IP.

21. A Data Link Layer as claimed in claim 19, wherein said RLC instance comprising a Data-RLC instance (14) and a Control-RLC instance (12).

22. A Data Link Layer as claimed in claim 21, wherein said Data-RLC instance comprising a segmentation, concatenation and reframing, SCR, module for receiving a plurality of said QoS oriented data packet, dividing same into sequence frames, and generating said RLC frame.

23. A Data Link Layer as claimed in anyone of claims 20 to 22, wherein said MAC instance comprising a multiplexer for receiving said RLC frame and multiplexing same onto a transport channel according to said QoS requirement for transmission to said physical layer.

24. A Data Link Layer as claimed in anyone of claims 20 to 23 further comprising a radio resource control, RRC, module for controlling said subflow processing module and the delivery of said RLC frames to said physical layer over said transport channels.

25. A Data Link Layer as claimed in claim 24, wherein said radio resource control, RRC, unit also for controlling the mapping said QoS requirement to a class of service, CoS, inside the DLL protocol.

26. A Data Link Layer as claimed in anyone of claims 20 to 25, wherein said interface is a multiplexer for receiving said RLC frame from said QoS plane, and multiplexing same into said transport channels.

27. A Data Link Layer as claimed in anyone of claims 20 to 26, wherein said QoS plane is reconfigurable and accepts various types of error recovery selected according to said QoS requirement.

28. A Data Link Layer as claimed in anyone of claims 19 to 27, further comprising identical said QoS planes and said subflow processing module at the receiving end of the UMTS.

29. A method for direct processing a network layer protocol data packet for transmission over a UMTS wireless communication system, comprising the steps of:
- separating a radio link control, RLC, layer of the UMTS wireless communication system into a plurality of Quality of Service, QoS, planes, each said QoS plane for processing a QoS oriented data packet according to a QoS requirement;
- generating a radio link control, RLC frame;
- processing said network layer protocol data packet by converting said network layer protocol data packet into said QoS oriented data packet and directing said QoS oriented data packet to one of said QoS planes according to QoS information in said network layer protocol data packet; and
- forwarding said RLC frame to a physical layer over a transport channel; **characterized by** the step of separating comprising:
- providing a plurality of RLC protocol instances (14), a RLC protocol instance for each said QoS plane, said RLC protocol instance for receiving said QoS oriented data packet; and
- the step of generating said RLC frame providing a dynamic optimization of the size of said RLC frame based on conditions of a communication link, for enhancing the quality of the air transmission.

30. A method as claimed in claim 29, wherein said network layer protocol is Internet Protocol, IP.

31. A method as claimed in claim 30, wherein said step of processing further comprising dividing said QoS oriented data packet into smaller sequence frames and reframing same into said RLC frame.

32. A method as claimed in claim 31, wherein said step of processing comprising adding a length indicator (47), a beginning of frame field (75), a sequence number field (76), and a QoS plane number (73) to said network layer protocol data packet.

33. A method as claimed in anyone of claims 29 to 32, further comprising regulating the delivery of said RLC frames to said physical layer over said transport channel.

34. A method as claimed in any of claims 29 to 33, wherein the step of processing furthers comprises multiframing.

## Patentansprüche

1. Datenverbindungssteurerungs- bzw. DLC-Schicht (100) an einem Übertragungsende eines drahtlosen Kommunikationssystems für die direkte Unterstützung eines Netzwerkschichtprotokolls (41), umfassend:
- Eine Vielzahl von Dienstgüte- bzw. QoS-Datenebenen, wobei eine jede der besagten Vielzahl von QoS-Datenebenen dafür bestimmt ist, ein QoS-orientiertes Datenpaket gemäß einer Dienstklasse, CoS, zu verarbeiten und eine Funkverbindungsprotokolldateneinheit, RLP PDU, bereitzustellen;
- ein QoS-Verarbeitungsmodul (71) für den Empfang eines Netzwerkschichtprotokolldatenpakets (45), welches das besagte Netzwerkschichtprotokolldatenpaket in das besagte QoS-orientierte Datenpaket konvertiert und das besagte QoS-orientierte Datenpaket gemäß QoS-Informationen in dem besagten Netzwerkschichtprotokolldatenpaket an eine der besagten QoS-Datenebenen leitet; und
- eine Schnittstelle (34) zwischen der besagten DLC und einer physischen Schicht, um die besagte RLP PDU zu empfangen und an die besagte physische Schicht weiterzuleiten;
**dadurch gekennzeichnet, dass** eine jede der besagten QoS-Datenebenen umfasst:
- Eine Verbindungszugangssteuerungs- bzw. LAC-Teilschicht (70) zum Empfangen des besagten QoS-orientierten Datenpakets und zum Erzeugen eines HDLC-ähnlichen LAC-Rahmens (77), wobei das besagte Erzeugen das Bit-Stuffing innerhalb der Nutzdaten (74) und das Einkapseln durch ein Start-Flag (78) und ein End-Flag (68) umfasst, wobei der besagte HDCL-ähnliche LAC-Rahmen eine veränderbare Größe aufweist, wobei die besagte veränderbare Größe auf der Basis von Bedingungen einer Kommunikationsverbindung dynamisch optimiert wird; und
- eine Medienzugriffssteuerungs- bzw. MAC-Teilschicht (80) zum Empfangen des besagten LAC-Rahmens und zum Erzeugen der besagten RLP PDU.

2. DLC-Schicht nach Anspruch 1, wobei die besagte LAC-Teilschicht umfasst: ein Segmentierungs- und Wiedervereinigungs- bzw. SAR-Modul (72) zum Empfangen des besagten dienstorientierten Datenpakets und Aufteilen desselben in eine Anzahl von Sequenzrahmen (74); und ein Framing- und automatische Wiederholungsaufforderungs- bzw. ARQ-Modul (73) zum Empfangen der besagten Sequenzrahmen und zum Einkapseln einer Vielzahl der besagten Sequenzrahmen in den besagten LAC-Rahmen.

3. DLC-Schicht nach Anspruch 1 oder 2, wobei die besagte MAC-Teilschicht umfasst:
einen dedizierten/gemeinsamen Router, DCR, (81) zum Empfangen und Routen der besagten über einen Funkverkehrskanal zu transportierenden LAC-Rahmen; und ein Funkverbindungsprotokoll, RLP, (82) zum Empfangen der besagten LAC-Rahmen und zum Konvertieren der besagten LAC-Rahmen in die besagten RLP PDUs.

4. DLC-Schicht nach Anspruch 1, wobei das besagte Netzwerkschichtprotokoll das Internetprotokoll, IP, ist.

5. DLC-Schicht nach Anspruch 4, weiterhin umfassend eine MAC-Steuerungszustandsmaschine, CSM, (83) zur Steuerung der Lieferung der besagten LAC-Rahmen an ein Funkverbindungsprotokoll, RLP, der MAC-Teilschicht.

6. DLC-Schicht nach Anspruch 3, wobei das RLP eine automatische Wiederholungsaufforderungs- bzw. ARQ-Funktion für die automatische Übertragungswiederholung der besagten RLP PDUs umfasst, wenn diese fehlerhaft an einem Empfangsende des besagten drahtlosen Systems empfangen wurden.

7. DLC-Schicht nach Anspruch 6, wobei bei der besagten ARQ-Funktion während eines Normalmodus- bzw. NM-Betriebs eine selektive Wiederholungskomponente aktiv ist, und während eines Burstmodus- bzw. BM-Betriebs eine Stop and Wait- bzw. SW-Komponente aktiv ist.

8. DLC-Schicht nach Anspruch 1, wobei die Größe des besagten LAC-Rahmens automatisch reduziert wird: i) wenn eine vorbestimmte Anzahl von negativen Bestätigungen, NAK, empfangen wird; oder ii) wenn keine Bestätigungen während einer vorbestimmten Zeitspanne empfangen werden.

9. DLC-Schicht nach einem beliebigen der vorstehenden Ansprüche, wobei die besagte Schnittstelle ein Multiplexer für den Empfang der besagten RLP PDU und für das Multiplexen dieser in einen physischen Kanal entsprechend der QoS der besagten RLP PDU ist, um sie an ein Empfangsende des drahtlosen Systems zu übertragen.

10. DLC-Schicht nach einem beliebigen der vorstehenden Ansprüche, weiterhin umfassend eine resource control unit (374) zum Abbilden einer QoS-Anforderung auf eine DLC-Dienstklasse, CoS, und zum Trennen der besagten CoS in dem DLS-Protokoll in die besagten QoS-Datenebenen.

11. Verfahren zur direkten Verarbeitung eines Netzwerkschichtprotokolldatenpakets (45) für die Übertragung über ein drahtloses Kommunikationssystem, die folgenden Schritte umfassend:
- Trennen einer Datenverbindungsschicht des drahtlosen Kommunikationssystems in eine Vielzahl von Dienstgüte- bzw. QoS-Datenebenen, wobei eine jede der besagten Vielzahl von QoS-Ebenen für die Verarbeitung eines QoS-orientierten Datenpakets entsprechend einer Dienstklasse, CoS, und für die Bereitstellung einer Funkverbindungsprotokoll-Dateneinheit, RLP PDU, bestimmt ist;
- Verarbeiten des besagten Netzwerkschichtprotokolldatenpakets durch Konvertieren des besagten Netzwerkschichtprotokolldatenpakets in das besagte QoS-orientierte Datenpaket und Leiten des besagten QoS-orientierten Datenpakets an eine der besagten QoS-Datenebenen gemäß den in dem besagten Netzwerkschichtprotokolldatenpaket enthaltenen QoS-Informationen;
- Weiterleiten der besagten RLP PDU an eine physische Schicht gemäß der QoS der besagten RLP PDU;
**dadurch gekennzeichnet, dass** der Schritt des Trennens umfasst:
- Bereitstellen einer Vielzahl von QoS-orientierten Verbindungszugangssteuerungs- bzw. LAC-Protokollinstanzen (70), eine LAC-Protokollinstanz für eine jede der besagten QoS-Datenebenen, wobei die besagte LAC-Protokollinstanz für den Empfang des besagten dienstorientierten Datenpakets und das Erzeugen eines HDLC-ähnlichen LAC-Rahmens (74) bestimmt ist, wobei das besagte Erzeugen das Bit-Stuffing innerhalb der Nutzdaten (74) und das Einkapseln durch ein Start-Flag (78) und ein End-Flag (68) umfasst, wobei der besagte HDLC-ähnliche LAC-Rahmen eine veränderbare Größe aufweist, wobei die besagte veränderbare Größe auf der Basis von Bedingungen einer Kommunikationsverbindung dynamische optimiert wird;
und
- Bereitstellen einer Vielzahl von QoS-orientierten Mediazugriffssteuerungs- bzw. MAC-Protokollinstanzen (80), eine MAC-Protokollinstanz für eine jede der besagten QoS-Datenebenen, wobei die besagte MAC-Protokollinstanz für den Empfang der besagten LAC-Rahmen und für das Erzeugen der besagten Funkverbindungsprotokolldateneinheit, RLP PDU, bestimmt ist.

12. Verfahren nach Anspruch 11, wobei der besagte Schritt des Erzeugens eines HDLC-ähnlichen LAC-Rahmens das Aufteilen des besagten QoS-orientierten Datenpaket in eine Anzahl von Sequenzrahmen und das Einkapseln einer Vielzahl der besagten Sequenzrahmen in den besagten LAC-Rahmen umfasst.

13. Verfahren nach Anspruch 12, wobei das besagte Netzwerkschichtprotokoll das Internetprotokoll, IP, ist.

14. Verfahren nach Anspruch 11 oder 12, wobei der besagte Schritt des Erzeugens der besagten RLP PDU das Empfangen der besagten LAC-Rahmen und das Konvertieren der besagten LAC-Rahmen in die besagten RMP PDUs umfasst.

15. Verfahren nach Anspruch 14, weiterhin umfassend den Schritt des Steuerns der Lieferung der besagten LAC-Rahmen an das besagte RLP umfasst.

16. Verfahren nach einem beliebigen der Ansprüche 12 bis 15, weiterhin umfassend den Schritt des Sendens einer automatischen Wiederholungsaufforderungs- bzw. ARQ-Funktion für die automatische Übertragungswiederholung der besagten RLP-PDUs, wenn diese fehlerhaft an einem Empfangsende des besagten drahtlosen Systems empfangen werden.

17. Verfahren nach einem beliebigen der Ansprüche 11 bis 16, wobei der besagte Schritt des Verarbeitens das Abbilden einer QoS-Anforderung auf eine DLC-Dienstklasse, CoS, und das Trennen der besagten CoS innerhalb des DLC-Protokolls in die besagten QoS-Datenebenen umfasst.

18. Verfahren nach Anspruch 17, wobei der besagte Schritt des Verarbeitens weiterhin das Hinzufügen eines Längenindikators zu dem besagten Netzwerkschichtprotokolldatenpaket umfasst.

19. Datenverbindungsschicht, DLL, (100) an einem Übertragungsende eines Universal Mobile Telecommunications System, UMTS, für die direkte Unterstützung einer Netzwerkschicht, umfassend:
- Eine Vielzahl von Dienstgüte- bzw. QoS-Datenebenen, wobei eine jede der besagten QoS-Ebenen dafür bestimmt ist, ein QoS-orientiertes Datenpaket gemäß einer CoS-Anforderung zu verarbeiten und einen Funkverbindungssteuerungs- bzw. RLC-Rahmen bereitzustellen;
- ein Teilflussverarbeitungsmodul für den Empfang eines Netzwerkschichtprotokolldatenpakets, welches das besagte Netzwerkschichtprotokolldatenpaket in das besagte QoS-orientierte Datenpaket konvertiert und das besagte QoS-orientierte Datenpaket gemäß QoS-Informationen in dem besagten Netzwerkschichtprotokolldatenpaket an eine der besagten QoS-Ebenen leitet; und
- eine Schnittstelle zwischen der besagten DLL und einer physischen Schicht, um die
besagten RLC-Rahmen zu empfangen und an die besagte physische Schicht;
**dadurch gekennzeichnet, dass** eine jede der besagten QoS-Ebenen umfasst:
- Eine Funkverbindungssteuerungs- bzw. RLC-Teilschicht (70) zum Empfangen des besagten QoS-orientierten Datenpakets und zum Erzeugen RLC-Rahmens (77), wobei der besagte RLC-Rahmen eine veränderbare Größe aufweist, wobei die besagte veränderbare Größe auf der Basis von Bedingungen einer Kommunikationsverbindung dynamisch optimiert wird; und
- eine Medienzugriffssteuerungs- bzw. MAC-Teilschicht (80) zum Empfangen des besagten RLC-Rahmens über logische Kanäle, und zum Multiplexen der besagten RLC-Rahmen auf Transportkanäle.

20. Datenverbindungsschicht nach Anspruch 19, wobei das besagte Netzwerkschichtprotokoll das Internetprotokoll, IP, ist.

21. Datenverbindungsschicht nach Anspruch 19, wobei die besagte RLC-Instanz eine Daten-RLC-Instanz (14) und eine Steuerungs-RLC-Instanz (12) umfasst.

22. Datenverbindungsschicht nach Anspruch 21, wobei die besagte Daten-RLC-Instanz ein Segmentierungs-, Verkettungs- und Reframing- bzw. SCR-Modul für den Empfang einer Vielzahl der besagten QoS-orientierten Datenpakete, das Aufteilen dieser in Sequenzrahmen und das Erzeugen des besagten RLC-Rahmens umfasst.

23. Datenverbindungsschicht nach einem beliebigen der Ansprüche 20 bis 22, wobei die besagte MAC-Instanz einen Multiplexer für den Empfang des besagten RLC-Rahmens und dessen Multiplexen auf einen Transportkanal gemäß der besagten QoS-Anforderung für die Übertragung an die besagte physische Schicht umfasst.

24. Datenverbindungsschicht nach einem beliebigen der Ansprüche 20 bis 23, weiterhin umfassend ein Funkressourcensteuerungs- bzw. RRC-Moduls zur Steuerung des besagten Teilflussverarbeitungsmoduls und zur Lieferung der besagten RLC-Rahmen über die besagten Transportkanäle an die besagte physische Schicht.

25. Datenverbindungsschicht nach Anspruch 24, wobei die besagte Funkressourcensteuerungs- bzw. RRC-Einheit ebenfalls für die Steuerung und das Abbilden der besagten QoS-Anforderung auf eine Dienstklasse, CoS, in dem DLL-Protokoll bestimmt ist.

26. Datenverbindungssteuerung nach einem beliebigen der Ansprüche 20 bis 25, wobei die besagte Schnittstelle ein Multiplexer für den Empfang des besagten RLC-Rahmens von der besagten QoS-Ebene und für dessen Multiplexen in die besagten Transportkanäle ist.

27. Datenverbindungssteuerung nach einem beliebigen der Ansprüche 20 bis 26, wobei die besagte QoS-Ebene rekonfigurierbar ist und unterschiedliche Arten der gemäß der besagten QoS-Anforderung ausgewählten Fehlerbehebung unterstützt.

28. Datenverbindungssteuerung nach einem beliebigen der Ansprüche 19 bis 27, weiterhin umfassend identische der besagten QoS-Ebenen und das besagte Teilflussverarbeitungsmodul an dem Empfangsende des UMTS.

29. Verfahren zur direkten Verarbeitung eines Netzwerkschichtprotokolldatenpakets für die Übertragung über ein drahtloses UMTS-Kommunikationssystem, die folgenden Schritte umfassend:
- Trennen einer Funkverbindungssteuerungs- bzw. RLC-Schicht des drahtlosen UMTS-Kommunikationssystems in eine Vielzahl von Dienstgüte- bzw. QoS-Ebenen, wobei eine jede der besagten QoS-Ebenen für die Verarbeitung eines QoS-orientierten Datenpakets entsprechend einer CoS-Anforderung bestimmt ist;
- Erzeugen eines Funkverbindungssteuerungs- bzw. RLC-Rahmens;
- Verarbeiten des besagten Netzwerkschichtprotokolldatenpakets durch Konvertieren des besagten Netzwerkschichtprotokolldatenpakets in das besagte QoS-orientierte Datenpaket und Leiten des besagten QoS-orientierten Datenpakets an eine der besagten QoS-Ebenen gemäß den in dem besagten Netzwerkschichtprotokolldatenpaket enthaltenen QoS-Informationen; und
- Weiterleiten des besagten RLC-Rahmens über einen Transportkanal an eine
physische Schicht;
**dadurch gekennzeichnet, dass** der Schritt des Trennens umfasst:
- Bereitstellen einer Vielzahl von RLC-Protokollinstanzen (14), eine RLC-Protokollinstanz für eine jede der besagten QoS-Ebenen, wobei die besagte RLC-Protokollinstanz für den Empfang des besagten QoS-orientieren Datenpakets bestimmt ist; und
- den Schritt des Erzeugens des besagten RLC-Rahmens unter Bereitstellen einer dynamischen Optimierung der Größe des besagten RLC-Rahmens auf der Basis von Bedingungen einer Kommunikationsverbindung, um die Qualität für die Luftübertragung zu erhöhen.

30. Verfahren nach Anspruch 29, wobei das besagte Netzwerkschichtprotokoll das Internetprotokoll, IP, ist.

31. Verfahren nach Anspruch 30, wobei der besagte Schritt des Verarbeitens weiterhin das Aufteilen des besagten QoS-orientierten Datenpakets in kleinere Sequenzrahmen und das Reframing dieser in den besagten RLC-Rahmen umfasst.

32. Verfahren nach Anspruch 31, wobei der besagte Schritt des Verarbeitens das Hinzufügen eines Längenindikators (47), eines Anfangs eines Rahmenfelds (75), eines Sequenznummerfelds (76) und einer QoS-Ebenennummer (73) zu dem besagten Netzwerkschichtprotokolldatenpaket umfasst.

33. Verfahren nach einem beliebigen der Ansprüche 29 bis 32, weiterhin umfassend das Regeln der Lieferung des besagten RLC-Rahmens über den besagten Transportkanal an die besagte physische Schicht.

34. Verfahren nach einem beliebigen der Ansprüche 29 bis 33, wobei der Schritt des Verarbeitens weiterhin das Multiframing umfasst.

## Revendications

1. Couche de commande de liaison de données, DLC, (100) au niveau d'une extrémité d'émission d'un système de communication sans fil pour le support direct d'un protocole de couche réseau (41), comprenant :
- une pluralité de plans de données de qualité de service, QoS, chacun parmi ladite pluralité de plans de données QoS traitant un paquet de données orienté QoS conformément à une classe de service, CoS, et fournissant une unité de données de protocole de liaison radio, RLP PDU ;
- un module de traitement QoS (71) pour recevoir un paquet de données de protocole de couche réseau (45) convertissant ledit paquet de données de protocole de couche réseau en ledit paquet de données orienté QoS, et dirigeant ledit paquet de données orienté QoS vers l'un desdits plans de données QoS conformément à des informations QoS dans ledit paquet de données de protocole de couche réseau ;
et
- une interface (34) entre ledit DLC et une couche physique pour recevoir ladite RLP PDU et transmettre celle-ci à ladite couche physique ;
**caractérisé en ce que** chacun desdits plans de données QoS comprend :
- une sous-couche de commande d'accès à la liaison, LAC, (70) pour recevoir ledit paquet de données orienté QoS et générer une trame LAC de type HDLC (77), ladite génération comprenant un bourrage de bits dans la charge utile (74) et l'encapsulation par un drapeau de début (78) et un drapeau de fin (68), ladite trame LAC de type HDLC ayant une taille variable, ladite taille variable étant optimisée dynamiquement sur la base de conditions d'une liaison de communication ; et
- une sous-couche de commande d'accès au support, MAC, (80) pour recevoir ladite trame LAC et générer ladite RLP PDU.

2. Couche DLC selon la revendication 1, dans laquelle ladite sous-couche LAC comprend : un module de segmentation et de réassemblage, SAR, (72) pour recevoir ledit paquet de données orienté service et diviser celui-ci en un nombre de trames séquentielles (74) ; et un module de synchronisation de trame et de demande de répétition automatique, ARQ, (73) pour recevoir lesdites trames séquentielles et encapsuler une pluralité desdites trames séquentielles dans ladite trame LAC.

3. Couche DLC selon la revendication 1 ou 2, dans laquelle ladite sous-couche MAC comprend : un routeur dédié/commun, DCR, (81) pour recevoir et acheminer lesdites trames LAC à transporter sur un canal de trafic radio ; et un protocole de liaison radio, RLP, (82) pour recevoir lesdites trames LAC et convertir lesdites trames LAC en lesdites RLP PDU.

4. Couche DLC selon la revendication 1, dans laquelle ledit protocole de couche réseau est un protocole Internet, IP.

5. Couche DLC selon la revendication 4, comprenant en outre une machine d'état de commande, CSM, MAC (83) pour commander la distribution desdites trames LAC vers un protocole de liaison radio, RLP, de la sous-couche MAC.

6. Couche DLC selon la revendication 3, dans laquelle ledit RLP comprend une fonction de demande de répétition automatique, ARQ, pour une retransmission automatique desdites RLP PDU si elles sont reçues par erreur au niveau d'une extrémité de réception dudit système sans fil.

7. Couche DLC selon la revendication 6, dans laquelle ladite fonction ARQ présente un élément de répétition sélective actif durant un mode normal, NM, de fonctionnement et un élément d'arrêt et d'attente, SW, actif durant un mode rafale, BM, de fonctionnement.

8. Couche DLC selon la revendication 1, dans laquelle ladite taille de ladite trame LAC est automatiquement réduite : i) lorsqu'un nombre prédéterminé d'accusés de réception négatifs, NAK, est reçu ; ou ii) si aucun accusé de réception n'est reçu pendant une période prédéterminée.

9. Couche DLC selon l'une quelconque des revendications précédentes, dans laquelle ladite interface est un multiplexeur pour recevoir ladite RLP PDU, et multiplexer celle-ci dans un canal physique conformément à la QoS de ladite RLP PDU, pour la transmission vers une extrémité de réception dudit système sans fil.

10. Couche DLC selon l'une quelconque des revendications précédentes, comprenant en outre une unité de commande de ressources (374) pour mettre en correspondance une exigence de QoS avec une classe de services, CoS, DLC et séparer ladite CoS dans le protocole DLC en lesdits plans de données QoS.

11. Procédé de traitement direct d'un paquet de données de protocole de couche réseau (45) pour la transmission sur un système de communication sans fil, comprenant les étapes suivantes :
- séparer une couche liaison de données du système de communication sans fil en une pluralité de plans de données de qualité de service, QoS, chacun parmi ladite pluralité de plans QoS traitant un paquet de données orienté QoS conformément à une classe de service, CoS, et fournissant une unité de données de protocole de liaison radio, RLP PDU ;
- traiter ledit paquet de données de protocole de couche réseau en convertissant ledit paquet de données de protocole de couche réseau en ledit paquet de données orienté QoS, et en dirigeant ledit paquet de données orienté QoS vers l'un desdits plans de données QoS conformément à des informations QoS dans ledit paquet de données de protocole de couche réseau ; et
- transférer ladite RLP PDU vers une couche physique conformément à la QoS de ladite RLP PDU ;
**caractérisé par** l'étape de séparation comprenant :
- la fourniture d'une pluralité d'instances de protocole de commande d'accès à la liaison, LAC, orientées QoS (70), une instance de protocole LAC pour chacun desdits plans de données QoS, ladite instance de protocole LAC recevant ledit paquet de données orienté service et générant une trame LAC de type HDLC (74), ladite génération comprenant un bourrage de bits dans la charge utile (74) et l'encapsulation par un drapeau de début (78) et un drapeau de fin (68), ladite trame LAC de type HDLC ayant une taille variable, ladite taille variable étant optimisée dynamiquement sur la base de conditions d'une liaison de communication ; et
- la fourniture d'une pluralité d'instances de protocole de commande d'accès au support, MAC, orientées QoS (80), une instance de protocole MAC pour chacun desdits plans de données QoS, ladite instance de protocole MAC recevant lesdites trames LAC et générant ladite unité de données de protocole de liaison radio, RLP PDU.

12. Procédé selon la revendication 11, dans lequel ladite étape de génération d'une trame LAC de type HDLC comprend la division dudit paquet de données orienté QoS en un nombre de trames séquentielles et l'encapsulation d'une pluralité desdites trames séquentielles dans ladite trame LAC.

13. Procédé selon la revendication 12, dans lequel ledit protocole de couche réseau est un protocole Internet, IP.

14. Procédé selon la revendication 11 ou 12, dans lequel ladite étape de génération de ladite RLP PDU comprend la réception desdites trames LAC et la conversion desdites trames LAC en lesdites RLP PDU.

15. Procédé selon la revendication 14, comprenant en outre l'étape de commande de la distribution desdites trames LAC vers ledit RLP.

16. Procédé selon l'une quelconque des revendications 12 à 15, comprenant en outre l'étape d'envoi d'une fonction de demande de répétition automatique, ARQ, pour une retransmission automatique desdites RLP PDU si elles sont reçues par erreur au niveau d'une extrémité de réception dudit système sans fil.

17. Procédé selon l'une quelconque des revendications 11 à 16, dans lequel ladite étape de traitement comprend la mise en correspondance d'une exigence de QoS avec une classe de service, CoS, DLC et la séparation de ladite CoS dans le protocole DLC en lesdits plans de données QoS.

18. Procédé selon la revendication 17, dans lequel ladite étape de traitement comprend en outre l'ajout d'un indicateur de longueur dans ledit paquet de données de protocole de couche réseau.

19. Couche liaison de données, DLL, (100) au niveau d'une extrémité de transmission d'un système de télécommunications mobiles universelles, UMTS, pour le support direct d'une couche réseau, comprenant :
- une pluralité de plans de qualité de service, QoS, chacun desdits plans QoS traitant un paquet de données orienté QoS conformément à une exigence de QoS, et fournissant une trame de commande de liaison radio, RLC ;
- un module de traitement de sous-flux pour recevoir un paquet de données de protocole de couche réseau, convertissant ledit paquet de données de protocole de couche réseau en ledit paquet de données orienté QoS, et dirigeant ledit paquet de données orienté QoS vers l'un desdits plans QoS conformément à des informations QoS dans ledit paquet de données de protocole de couche réseau ; et
- une interface entre ladite DLL et une couche physique pour recevoir ladite RLC et transmettre celle-ci à ladite couche physique ;
**caractérisée en ce que** chacun desdits plans QoS comprend :
- une sous-couche de commande de liaison radio, RLC, (70) pour recevoir ledit paquet de données orienté QoS, et pour générer une trame RLC (77), ladite trame RLC ayant une taille variable, ladite taille variable étant optimisée dynamiquement sur la base de conditions d'une liaison de communication ; et
- une sous-couche de commande d'accès au support, MAC, (80) pour recevoir ladite trame RLC sur des canaux logiques et pour multiplexer lesdites trames RLC sur des canaux de transport.

20. Couche liaison de données selon la revendication 19, dans laquelle ledit protocole de couche réseau est un protocole Internet, IP.

21. Couche liaison de données selon la revendication 19, dans laquelle ladite instance RLC comprend une instance données-RLC (14) et une instance commande-RLC (12).

22. Couche liaison de données selon la revendication 21, dans laquelle ladite instance données-RLC comprend un module de segmentation, concaténation et resynchronisation de trame, SCR, pour recevoir une pluralité desdits paquets de données orientés QoS, diviser ceux-ci en trames séquentielles, et gérer ladite trame RLC.

23. Couche liaison de données selon l'une quelconque des revendications 20 à 22, dans laquelle ladite instance MAC comprend un multiplexeur pour recevoir ladite trame RLC et multiplexer celle-ci sur un canal de transport conformément à ladite exigence de QoS pour la transmission vers ladite couche physique.

24. Couche liaison de données selon l'une quelconque des revendications 20 à 23 comprenant en outre un module de commande de ressources radio, RRC, pour commander ledit module de traitement de sous-flux et la distribution desdites trames RLC vers ladite couche physique sur lesdits canaux de transport.

25. Couche liaison de données selon la revendication 24, dans laquelle ladite unité de commande de ressources radio, RRC, commande également la mise en correspondance de ladite exigence de QoS avec une classe de service, CoS, dans le protocole DLL.

26. Couche liaison de données selon l'une quelconque des revendications 20 à 25, dans laquelle ladite interface est un multiplexeur pour recevoir ladite trame RLC à partir dudit plan QoS, et pour multiplexer celle-ci dans lesdits canaux de transport.

27. Couche liaison de données selon l'une quelconque des revendications 20 à 26, dans laquelle ledit plan QoS est reconfigurable et accepte différents types de reprise sur erreur sélectionnés conformément à ladite exigence de QoS.

28. Couche liaison de données selon l'une quelconque des revendications 19 à 27, comprenant en outre lesdits plans QoS identiques et ledit module de traitement de sous-flux à l'extrémité de réception de l'UMTS.

29. Procédé de traitement direct d'un paquet de données de protocole de couche réseau pour la transmission sur un système de communication sans fil UMTS, comprenant les étapes suivantes :
- séparer une couche de commande de liaison radio, RLC, du système de communication sans fil UMTS en une pluralité de plans de qualité de service, QoS, chacun desdits plans QoS traitant un paquet de données orienté QoS conformément à une exigence de QoS ;
- générer une trame de commande de liaison radio, RLC ;
- traiter ledit paquet de données de protocole de couche réseau en convertissant ledit paquet de données de protocole de couche réseau en ledit paquet de données orienté QoS, et en dirigeant ledit paquet de données orienté QoS vers l'un desdits plans QoS conformément à des informations QoS dans ledit paquet de données de protocole de couche réseau ;
- transférer ladite trame RLC vers une couche physique sur un canal de transport ;
**caractérisé par** l'étape de séparation comprenant :
- la fourniture d'une pluralité d'instances de protocole RLC (14), une instance de protocole RLC pour chacun desdits plans QoS, ladite instance de protocole RLC recevant ledit paquet de données orienté QoS ; et
- l'étape de génération de ladite trame RLC fournissant une optimisation dynamique de la taille de ladite trame RLC sur la base de conditions d'une liaison de communication, pour améliorer la qualité de la transmission radio.

30. Procédé selon la revendication 29, dans lequel ledit protocole de couche réseau est un protocole Internet, IP.

31. Procédé selon la revendication 30, dans lequel ladite étape de traitement comprend en outre la division dudit paquet de données orienté QoS en des trames séquentielles plus petites et la resynchronisation de celles-ci en ladite trame RLC.

32. Procédé selon la revendication 31, dans lequel ladite étape de traitement comprend l'ajout d'un indicateur de longueur (47), d'un début de champ de trame (75), d'un champ de numéro de séquence (76) et d'un numéro de plan QoS (73) audit paquet de données de protocole de couche réseau.

33. Procédé selon l'une quelconque des revendications 29 à 32, comprenant en outre la régulation de la distribution desdites trames RLC vers ladite couche physique sur ledit canal de transport.

34. Procédé selon l'une quelconque des revendications 29 à 33, dans lequel l'étape de traitement comprend en outre la synchronisation de trame multiple.
